(19) Europäisches Patentamt
European Patent Office
Office européen des brevets

(11) **EP 2 515 527 A1**

(12) **EUROPEAN PATENT APPLICATION**

(43) Date of publication:
**24.10.2012 Bulletin 2012/43**

(51) Int Cl.:
***H04N 5/235*** *(2006.01)*

(21) Application number: **11162858.2**

(22) Date of filing: **18.04.2011**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Aver Information Inc.**
**New Taipei City**
**23673 (TW)**

(72) Inventors:
• **Lu, Chun-Wei**
**NEW TAIPEI CITY (TW)**

• **Hsu, Chi-Fa**
**NEW TAIPEI CITY (TW)**
• **Huang, Te-Wei**
**NEW TAIPEI CITY (TW)**

(74) Representative: **Becker Kurig Straus**
**Bavariastrasse 7**
**80336 München (DE)**

Remarks:
Amended claims in accordance with Rule 137(2) EPC.

(54) **Apparatus and method for eliminating glare**

(57)    An apparatus and a method for eliminating glare are disclosed, wherein this method includes steps as follow. First, a first image is captured from an object when a first light source radiates light and a second light source is turned off, and a second image is captured from the object when the first light source is turned off and the second light source radiates light, wherein the first and second light sources are separate from each other. Then, a first glaring area is removed from the first image to create a first modified image, and a second glaring area is removed from the second image to create a second modified image. Then, the first and second modified images are merged to create a merged image.

EP 2 515 527 A1

## Description

## BACKGROUND

Technical Field

The present disclosure relates to image processing techniques, and more particularly, apparatus and methods for eliminating glare.

Description of Related Art

Document cameras are real-time image capture devices for displaying an object to a large audience. Users usually reduce environment light to enhance the definition of images outputted by the document camera, and therefore the brightness of the outputted images is also reduced. When the environment light is too low, an auto exposure function of the document camera may overstep its limit of adjustment. In this way, the brightness of the images outputted by the document camera may be to low, thereby adversely affecting the definition and resolution of the outputted images.

The user may turn on one additional lamp to enhance the surrounding brightness for the images outputted by the document camera. When a document has a polished surface, and when the additional lamp is turned on, the images of the document outputted by the document camera usually has a glaring area (over-exposure area). The glaring area results from that light reflected by the polished surface enters the photosensor of the document camera.

## SUMMARY

The following presents a simplified summary of the disclosure in order to provide a basic understanding to the reader. This summary is not an extensive overview of the disclosure and it does not identify key/critical elements of the present invention or delineate the scope of the present invention. Its sole purpose is to present some concepts disclosed herein in a simplified form as a prelude to the more detailed description that is presented later.

In one or more various aspects, the present disclosure is directed to apparatus and methods for eliminating glare.

According to one embodiment of the present invention, an apparatus and methods for eliminating glare includes a first light source, a second light source, an image-capturing device, an image-processing unit and an image-merging unit. The second light source is separate from the first light source. The image-capturing device can capture a first image from an object when the first light source radiates light and a second light source is turned off, and can capture a second image from the object when the first light source is turned off and the second light source radiates light. The image-processing unit can remove a first glaring area from the first image to create a first modified image, and can remove a second glaring area from the second image to create a second modified image. The image-merging unit can merge the first and second modified images to create a merged image.

The apparatus may further include an image edge contrast unit. The image edge contrast unit can eliminate a seam that results from resulting from merging the first and second modified images from the merged image.

Moreover, the apparatus may further include an image projection device. The image projection device can project the merged image. Significantly, the image projection device can project the merged image in which the seam is eliminated.

The first and second images captured by the image-capturing device have a RGB format, and the image-processing unit may include an image-converting module, an identifying module and a deleting module. The image-converting module can convert the RGB format of the first and second images into a YCbCr format of the first and second images. The identifying module can determine the first glaring area in which any Y value is greater than a first predetermined luminance value and a chroma shift of Cb and Cr values falls within a first predetermined range, and can determine the second glaring area in which any Y value is greater than a second predetermined luminance value and a chroma shift of Cb and Cr values falls within a second predetermined range. The deleting module can erase first glaring area from the first image to create a first modified image, and can erase the second glaring area from the second image to create the second modified image.

In addition, the image-capturing device may have a photographic lens. The first and second light sources are disposed at two opposing side of the photographic lens symmetrically. The object may have a polished surface.

According to another embodiment of the present invention, a method for eliminating glare includes steps as follow. In step (a), a first image is captured from an object when a first light source radiates light and a second light source is turned off, and a second image is captured from the object when the first light source is turned off and the second light source radiates light, wherein the first and second light sources are separate from each other. In step (b), a first glaring area is removed from the first image to create a first modified image, and a second glaring area is removed from the second image to create a second modified image. In step (c), the first and second modified images are merged to create a merged image.

The method may further include step (d). In step (d), a seam that results from resulting from merging the first and second modified images is eliminated from the merged image.

Moreover, the method may further include step (e). In step (e), the merged image is projected. Significantly, the merged image in which the seam is eliminated is projected.

The first and second images captured by the step (a) have a RGB format, and the step (b) includes sub-steps (b1), (b2) and (b3). In sub-step (b1), the RGB format of the first and second images is converted into a YCbCr format of the first and second images. Then, the first glaring area in which any Y value is greater than a first predetermined luminance value and a chroma shift of Cb and Cr values falls within a first predetermined range is determined in sub-step (b2), and furthermore the second glaring area in which any Y value is greater than a second predetermined luminance value and a chroma shift of Cb and Cr values falls within a second predetermined range is determined in sub-step (b2). Then, the first glaring area is erased from the first image to create a first modified image in sub-step (b3), and furthermore the second glaring area is erased from the second image to create the second modified image.

Technical advantages are generally achieved, by embodiments of the present invention, as follows:

> 1. The merged image can be outputted without the glaring areas;
> 2. The glare problem is circumvented by embodiments of the present invention without using an antiglare optical film or a light-diffusing sheet; and
> 3. It is convenient for users friendly to use the apparatus that can automatically eliminate glare.

Many of the attendant features will be more readily appreciated, as the same becomes better understood by reference to the following detailed description considered in connection with the accompanying drawings.

**BRIEF DESCRIPTION OF THE DRAWINGS**

The present description will be better understood from the following detailed description read in light of the accompanying drawing, wherein:

> Fig. 1 is a block diagram of an apparatus for eliminating glare according to one embodiment of the present disclosure;
> Fig. 2 is a block diagram of an image-processing unit of Fig. 1 according to one embodiment of the present disclosure;
> Fig. 3 is a flowchart of a method for eliminating glare according to one embodiment of the present disclosure; and
> Fig. 4 is a schematic drawing of merging images according to one embodiment of the present disclosure.

**DETAILED DESCRIPTION**

In the following detailed description, for purposes of explanation, numerous specific details are set forth in order to attain a thorough understanding of the disclosed embodiments. It will be apparent, however, that one or more embodiments may be practiced without these specific details. In other instances, well-known structures and devices are schematically shown in order to simplify the drawing.

As used in the description herein and throughout the claims that follow, the meaning of "a", "an", and "the" includes reference to the plural unless the context clearly dictates otherwise. Also, as used in the description herein and throughout the claims that follow, the terms "comprise or comprising", "include or including", "have or having", "contain or containing" and the like are to be understood to be open-ended, i.e., to mean including but not limited to. As used in the description herein and throughout the claims that follow, the meaning of "in" includes "in" and "on" unless the context clearly dictates otherwise.

It will be understood that, although the terms first, second, etc. may be used herein to describe various elements, these elements should not be limited by these terms. These terms are only used to distinguish one element from another. For example, a first element could be termed a second element, and, similarly, a second element could be termed a first element, without departing from the scope of the embodiments. As used herein, the term "and/or" includes any and all combinations of one or more of the associated listed items.

It will be understood that when an element is referred to as being "connected" or "coupled" to another element, it can be directly connected or coupled to the other element or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which example embodiments belong. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

In practice, three methods are disclosed to solve the glare problems as follows. First, a user adjusts an orientation of a light source, so that light reflected by the polished surface cannot enter a photographic lens for preventing over exposure. In this way, however, the brightness of a central region of the image is reduced, and a glaring area may still exist in the image. Second, a light-diffusing sheet is positioned on the light source, so as to diffuse light for reducing the glare. In this way, however, the production cost is increased. Third, an antiglare optical film is disposed on a polished surface of a document, so that light reflected by the polished surface is reduced in intensity for reducing the glare. In this way, however, the definition of the image of the document is reduced because the antiglare optical film is not a transparent body.

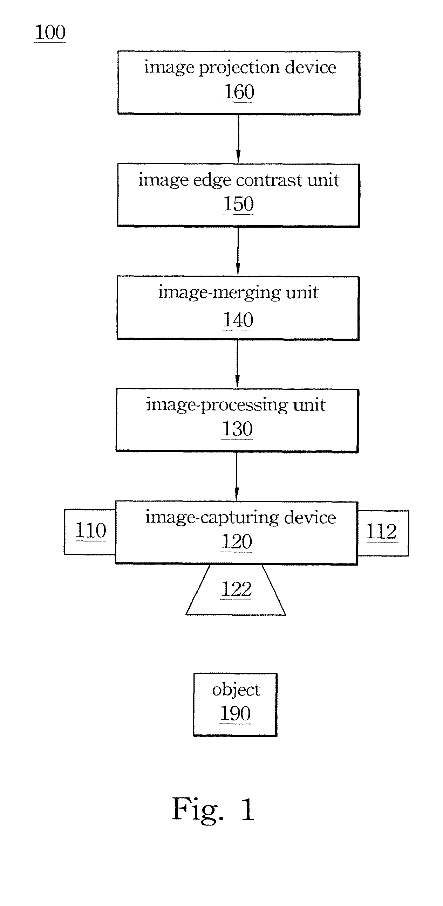

In view of the foregoing, the present disclosure is directed to an apparatus and a method for eliminating glare. The apparatus may be easily inserted into existing devices, such as a document camera, and may be applicable or readily adaptable to all technologies. It should be noted that the glare problem is circumvented by embodiments of the present invention without using any antiglare optical film or light-diffusing sheet. Herewith embodiments of the present invention are illustrated by reference to the following description considered in Figs. 1-4.

Fig. 1 is a block diagram of an apparatus 100 for eliminating glare according to one embodiment of the present disclosure. As shown in Fig. 1, the apparatus 100 includes a first light source 110, a second light source 112, an image-capturing device 120, an image-processing unit 130 and an image-merging unit 140.

The first and second light sources 110 and 112 are separate from each other. The image-capturing device 120 is coupled with the image-processing unit 130. The image-processing unit 130 is coupled with the image-merging unit 140.

In use, the image-capturing device 120 can capture a first image from an object 190 when the first light source 110 radiates light and a second light source 112 is turned off. Also, the image-capturing device 120 can capture a second image from the object 190 when the first light source 110 is turned off and the second light source 112 radiates light. The image-processing unit 130 can remove a first glaring area from the first image to create a first modified image. Also, the image-processing unit 130 can remove a second glaring area from the second image to create a second modified image. The image-merging unit 140 can merge the first and second modified images to create a merged image. Thus, the merged image has no glaring areas, thereby solving the glare problems.

Moreover, a seam may results from resulting from merging the first and second modified images. In practice, the brightness of the first modified image may be different from the brightness of the second modified image, and the seam is due to a brightness difference that exists in the border between the first and second modified images. Therefore, the apparatus 100 may further include an image edge contrast unit 150. The image edge contrast unit 150 is coupled with the image-merging unit 140. The image edge contrast unit 150 can eliminate the seam that results from resulting from merging the first and second modified images from the merged image by comparing an edge of the first modified image with a corresponding edge of the second modified image. Thus, the first and second modified images can be merged without the seam.

For outputting the merged image, the apparatus 100 may further include an image projection device 160. The image projection device 160 is coupled with the image edge contrast unit 150. In use, the image projection device 160 can project the merged image. Significantly, the image projection device 160 can project the merged image in which the seam is eliminated. For example, the merged image is projected on a screen for teaching, a briefing or the like.

In addition, the image-capturing device 120 may have a photographic lens 122. The first and second light sources 110 and 112 are disposed at two opposing side of the photographic lens 122 symmetrically for prevent that the first and second glaring areas overlap. If the first and second glaring areas overlapped, the merged image would be incomplete. For example, the first light source 110 is positioned at the left of the photographic lens 122, and the second light source 112 is positioned at the right of the photographic lens 122; alternatively, the first light source 110 is positioned at the upper side of the photographic lens 122, and the second light source 112 is positioned at the lower side of the photographic lens 122. In symmetrical design, the brightness of the first light source 110 is substantially equal to the brightness of the second light source 112 that is the same as the first light source 110.

In the apparatus 100, the first and second light sources 110 and 112 may be LED devices, cold cathode fluorescent lamps or the like. The image-capturing device 120 may be a video camera, an image sensor or the like. The image projection device 160 may be a projector.

The image-processing unit 130, the image-merging unit 140 and the image edge contrast unit 150 may be hardware, software and/or firmware. For example, if an implementer determines that speed and accuracy are paramount, the implementer may opt for a mainly hardware and/or firmware vehicle; alternatively, if flexibility is paramount, the implementer may opt for a mainly software implementation; or, yet again alternatively, the implementer may opt for some combination of hardware, software, and/or firmware.

One of ordinary skill in the art will appreciate that the above denomination is provided for illustrative purposes only to further explain applications of these units and are not intended to limit these units in any manner. In one or more embodiments, one unit may be divided into various units, or one unit may be integrated into another unit. Those with ordinary skill in the art may design one or more unites depending on the desired application.

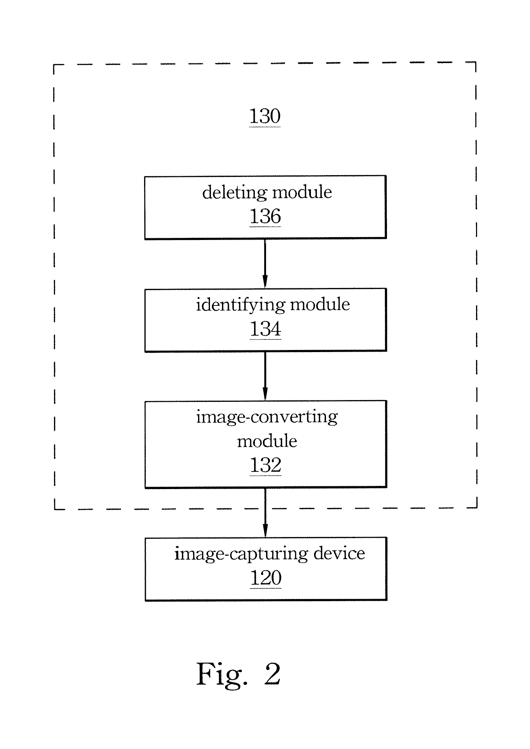

Fig. 2 is a block diagram of the image-processing unit 130 of Fig. 1 according to one embodiment of the present disclosure. As shown in Fig. 2, the image-processing unit 130 includes an image-converting module 132, an identifying module 134 and a deleting module 136. The image-capturing device 120 is coupled with the image-converting module 132. The image-converting module 132 is coupled with the identifying module 134. The identifying module 134 is coupled with the deleting module 136.

The first and second images captured by the image-capturing device 120 have a RGB format. The image-converting module 132 can convert the RGB format of the first and second images into a YCbCr format of the first and second images.

The identifying module 134 can determine the first glaring area in which any Y value is greater than a first predetermined luminance value and a chroma shift of Cb and Cr values falls within a first predetermined range. Also, the identifying module 134 can determine the second glaring area in which any Y value is greater than a second predetermined luminance value and a chroma shift of Cb and Cr values falls within a second predetermined range. For example, the chroma shift x of Cb and Cr values satisfies the relationship of:

$$x=c(|Cb-a|+|Cr-b|),$$

where a, b, c is parameters.

Those with ordinary skill in the art may choice suitable values for the first and second predetermined luminance values, and the first and second predetermined ranges depending on the desired application. For example, the first predetermined luminance value may be equal to the second predetermined luminance value, and the first predetermined range may be equal to the second predetermined range.

The deleting module 136 can erase first glaring area from the first image to create a first modified image. Also, the deleting module 136 can erase the second glaring area from the second image to create the second modified image.

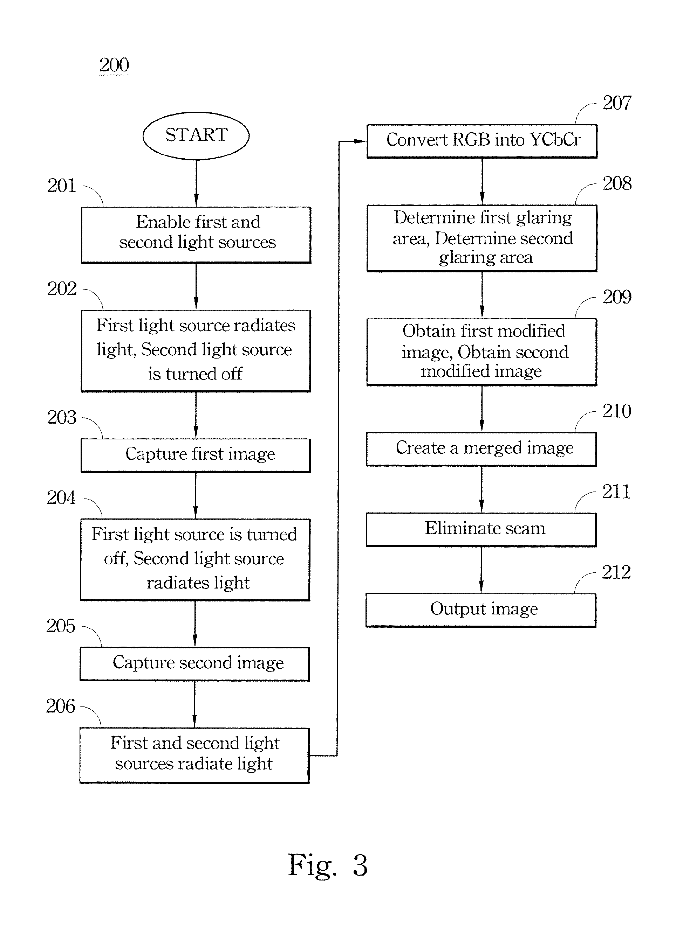

Fig. 3 is a flowchart of a method 200 for eliminating glare according to one embodiment of the present disclosure. In Fig. 3, the method 200 includes steps 201-212 as follows (The steps are not recited in the sequence in which the steps are performed. That is, unless the sequence of the steps is expressly indicated, the sequence of the steps is interchangeable, and all or part of the steps may be simultaneously, partially simultaneously, or sequentially performed). It should be noted that those implements to perform the steps in the method 200 are disclosed in above embodiments and, thus, are not repeated herein.

In step 201, first and second light sources are enabled, and "3A" function of the image-capturing devices is inhibited ("3A" represents Auto Focus, Auto White Balance and Auto Exposure). In step 202, the first light source radiates light, and the second light source is turned off; meanwhile, a first image is captured from an object in step 203. In step 204, the first light source is turned off, and the second light source radiates light;

meanwhile, a second image is captured from the object in step 205. Then, the first and second light sources radiate light in step 206. In steps 207-209, a first glaring area is removed from the first image to create a first modified image, and a second glaring area is removed from the second image to create a second modified image.

Specifically, the first and second images captured by steps 203 and 205 have a RGB format. In step 207, the RGB format of the first and second images is converted into a YCbCr format of the first and second images. Then, the first glaring area in which any Y value is greater than a first predetermined luminance value and a chroma shift of Cb and Cr values falls within a first predetermined range is determined in step 208, and furthermore the second glaring area in which any Y value is greater than a second predetermined luminance value and a chroma shift of Cb and Cr values falls within a second predetermined range is determined in step 208. Then, the first glaring area is erased from the first image to create a first modified image in step 209, and furthermore the second glaring area is erased from the second image to create the second modified image in step 209.

Then, the first and second modified images are merged to create a merged image in step 210. In step 211, a seam that results from resulting from merging the first and second modified images is eliminated from the merged image. In step 212, the merged image is projected; significantly, the merged image in which the seam is eliminated is projected on a screen for teaching, a briefing or the like.

In one embodiment, the method 200 can be performed to process a static image. In use, this method can eliminate glare and output the processed static image.

When the method 200 processes the static image, a function of motion detection is incorporated in this method. In use, the method 200 can eliminate glare and output the processed static images; meanwhile, the method 200 can detect a change of the static image. When a user replaces the original object by another, the change occurs. After this replacement, the method 200 can be performed anew to eliminate glare and output the processed static image when the static image is stationary.

In another embodiment, the method 200 can be performed to process dynamic images. When a frequency of image output of the image-capturing device matches a frequency of alternatively switching the two light sources, viewers cannot feel light sources flashing. In use, this method can output the images without glare.

The method 200 may take the form of a computer program product on a computer-readable storage medium having computer-readable instructions embodied in the medium. Any suitable storage medium may be used including non-volatile memory such as read only memory (ROM), programmable read only memory (PROM), erasable programmable read only memory (EPROM), and electrically erasable programmable read only memory (EEPROM) devices; volatile memory such as SRAM, DRAM, and DDR-RAM; optical storage devices such as CD-ROMs and DVD-ROMs; and magnetic storage devices such as hard disk drives and floppy disk drives.

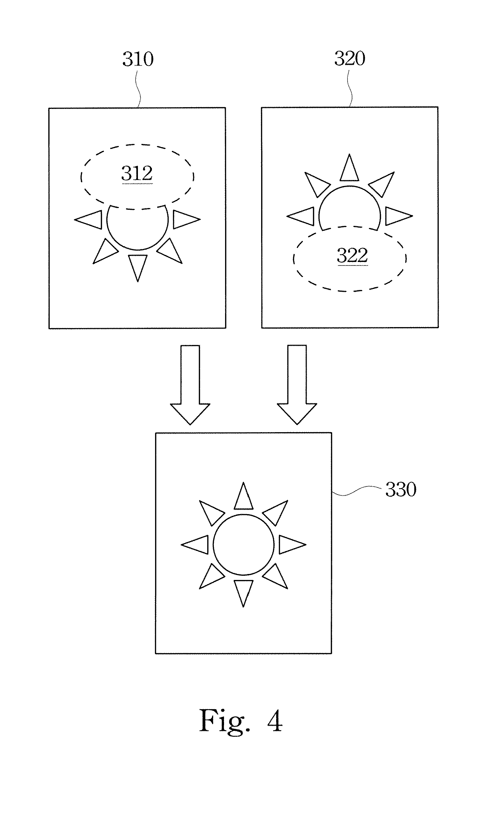

Fig. 4 is a schematic drawing of merging images according to one embodiment of the present disclosure. After the first glaring area 312 is removed from the first image 310, and the second glaring area 322 is removed from the second image 320, two modified images are merged to create a merged image 330.

The reader's attention is directed to all papers and documents which are filed concurrently with his specification and which are open to public inspection with this specification, and the contents of all such papers and documents are incorporated herein by reference.

All the features disclosed in this specification (including any accompanying claims, abstract, and drawings) may be replaced by alternative features serving the same, equivalent or similar purpose, unless expressly stated otherwise. Thus, unless expressly stated otherwise, each feature disclosed is one example only of a generic series of equivalent or similar features.

Any element in a claim that does not explicitly state "means for" performing a specified function, or "step for" performing a specific function, is not to be interpreted as a "means" or "step" clause as specified in 35 U.S.C. § 112, 6th paragraph. In particular, the use of "step of" in the claims herein is not intended to invoke the provisions of 35 U.S.C. § 112, 6th paragraph.

**Claims**

1. An apparatus for eliminating glare, the apparatus comprising:

   a first light source;
   a second light source being separate from the first light source;
   an image-capturing device for capturing a first image from an object when the first light source radiates light and a second light source is turned off, and for capturing a second image from the object when the first light source is turned off and the second light source radiates light;
   an image-processing unit for removing a first glaring area from the first image to create a first modified image, and for removing a second glaring area from the second image to create a second modified image; and
   an image-merging unit for merging the first and second modified images to create a merged image.

2. The apparatus of claim 1, wherein the first and second images captured by the image-capturing device have a RGB format, and the image-processing unit comprises:

   an image-converting module for converting the RGB format of the first and second images into a YCbCr format of the first and second images;
   an identifying module for determining the first glaring area in which any Y value is greater than a first predetermined luminance value and a chroma shift of Cb and Cr values falls within a first predetermined range, and for determining the second glaring area in which any Y value is greater than a second predetermined luminance value and a chroma shift of Cb and Cr values falls within a second predetermined range; and
   a deleting module for erasing first glaring area from the first image to create a first modified image, and for erasing the second glaring area from the second image to create the second modified image.

3. The apparatus of claim 1, wherein the image-capturing device has a photographic lens, and the first and second light sources are disposed at two opposing side of the photographic lens symmetrically.

4. The apparatus of claim 1, further comprising:

   an image edge contrast unit for eliminating a seam that results from resulting from merging the first and second modified images from the merged image; and
   an image projection device for projecting the merged image in which the seam is eliminated.

5. The apparatus of claim 1, further comprising:

   an image projection device for projecting the merged image.

6. A method for eliminating glare, the apparatus comprising:

   (a) capturing a first image from an object when a first light source radiates light and a second light source is turned off, and capturing a second image from the object when the first light source is turned off and the second light source radiates light, wherein the first and second light sources are separate from each other;
   (b) removing a first glaring area from the first image to create a first modified image, and removing a second glaring area from the second image to create a second modified image; and
   (c) merging the first and second modified images to create a merged image.

7. The method of claim 6, further comprising:

   (d) eliminating a seam that results from resulting from merging the first and second modified images from the merged image; and

(e) projecting the merged image in which the seam is eliminated.

8. The method of claim 6, further comprising:

projecting the merged image.

9. The method of claim 6, wherein the first and second images captured by the step (a) have a RGB format, and the step (b) comprises:

converting the RGB format of the first and second images into a YCbCr format of the first and second images;

determining the first glaring area in which any Y value is greater than a first predetermined luminance value and a chroma shift of Cb and Cr values falls within a first predetermined range, and determining the second glaring area in which any Y value is greater than a second predetermined luminance value and a chroma shift of Cb and Cr values falls within a second predetermined range; and

erasing the first glaring area from the first image to create a first modified image, and erasing the second glaring area from the second image to create the second modified image.

**Amended claims in accordance with Rule 137(2) EPC.**

**1.** An apparatus for eliminating glare, the apparatus comprising:

a first light source;

a second light source being separate from the first light source;

an image-capturing device for capturing a first image from an object when the first light source radiates light and a second light source is turned off, and for capturing a second image from the object when the first light source is turned off and the second light source radiates light;

an image-processing unit for removing a first glaring area from the first image to create a first modified image, and for removing a second glaring area from the second image to create a second modified image;

an image-merging unit for merging the first and second modified images to create a merged image;

an image edge contrast unit for eliminating a seam that results from merging the first and second modified images from the merged image; and

an image projection device for projecting the merged image in which the seam is eliminated.

**2.** The apparatus of claim 1, wherein the first and second images captured by the image-capturing device have a RGB format, and the image-processing unit comprises:

an image-converting module for converting the RGB format of the first and second images into a YCbCr format of the first and second images;

an identifying module for determining the first glaring area in which any Y value is greater than a first predetermined luminance value and a chroma shift of Cb and Cr values falls within a first predetermined range, and for determining the second glaring area in which any Y value is greater than a second predetermined luminance value and a chroma shift of Cb and Cr values falls within a second predetermined range; and

a deleting module for erasing first glaring area from the first image to create a first modified image, and for erasing the second glaring area from the second image to create the second modified image.

**3.** The apparatus of claim 1, wherein the image-capturing device has a photographic lens, and the first and second light sources are disposed at two opposing side of the photographic lens symmetrically.

**4.** A method for eliminating glare, the apparatus comprising:

(a) capturing a first image from an object when a first light source radiates light and a second light source is turned off, and capturing a second image from the object when the first light source is turned off and the second light source radiates light, wherein the first and second light sources are separate from each other;

(b) removing a first glaring area from the first image to create a first modified image, and removing a second glaring area from the second image to create a second modified image;

(c) merging the first and second modified images to create a merged image;

(d) eliminating a seam that results from merging the first and second modified images from the merged image; and

(e) projecting the merged image in which the seam is eliminated.

**5.** The method of claim 4, wherein the first and second images captured by the step (a) have a RGB format, and the step (b) comprises:

converting the RGB format of the first and second images into a YCbCr format of the first and second images;

determining the first glaring area in which any Y value is greater than a first predetermined luminance value and a chroma shift of Cb and Cr values falls within a first predetermined range, and determining the second glaring area in which any Y value is greater than a second predetermined luminance value and a chroma shift of Cb and Cr values falls within a second predetermined range; and

erasing the first glaring area from the first image to create a first modified image, and erasing the second glaring area from the second image to create the second modified image.

100

```
┌─────────────────────────────┐
│   image projection device   │
│            160              │
└─────────────────────────────┘
              │
              ▼
┌─────────────────────────────┐
│   image edge contrast unit  │
│            150              │
└─────────────────────────────┘
              │
              ▼
┌─────────────────────────────┐
│     image-merging unit      │
│            140              │
└─────────────────────────────┘
              │
              ▼
┌─────────────────────────────┐
│    image-processing unit    │
│            130              │
└─────────────────────────────┘
              │
              ▼
┌────┐┌─────────────────────────────┐┌────┐
│110 ││    image-capturing device   ││112 │
│    ││            120              ││    │
└────┘└─────────────────────────────┘└────┘
              ╱‾‾‾‾‾‾‾╲
              │  122  │

        ┌──────────┐
        │  object  │
        │   190    │
        └──────────┘
```

Fig. 1

Fig. 2

200

START

201 — Enable first and second light sources

202 — First light source radiates light, Second light source is turned off

203 — Capture first image

204 — First light source is turned off, Second light source radiates light

205 — Capture second image

206 — First and second light sources radiate light

207 — Convert RGB into YCbCr

208 — Determine first glaring area, Determine second glaring area

209 — Obtain first modified image, Obtain second modified image

210 — Create a merged image

211 — Eliminate seam

212 — Output image

Fig. 3

310        320

312

322

330

Fig. 4

| | Europäisches Patentamt<br>European Patent Office<br>Office européen des brevets | **EUROPEAN SEARCH REPORT** | Application Number<br>EP 11 16 2858 |
|---|---|---|---|

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2009/035702 A1 (CYPRESS SEMICONDUCTOR CORP [US]; KRAMER MARCUS [US]; VALOFF SCOTT [US]) 19 March 2009 (2009-03-19)<br>* page 2, line 28 - page 8, line 18 *<br>* page 10, line 5 - page 12, line 4 *<br>* figures 1,2,3,4a-4f,6a-6f *<br>----- | 1-9 | INV.<br>H04N5/235<br><br><br><br><br><br><br><br><br>TECHNICAL FIELDS SEARCHED (IPC)<br><br>H04N |

The present search report has been drawn up for all claims

| Place of search | Date of completion of the search | Examiner |
|---|---|---|
| Berlin | 13 February 2012 | Oberreich, Claudia |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 11 16 2858

This annex lists the patent family members relating to the patent documents cited in the above-mentioned European search report.
The members are as contained in the European Patent Office EDP file on
The European Patent Office is in no way liable for these particulars which are merely given for the purpose of information.

13-02-2012

| Patent document cited in search report | Publication date | Patent family member(s) | Publication date |
|---|---|---|---|
| WO 2009035702 A1 | 19-03-2009 | CN 101828384 A<br>US 2009073307 A1<br>WO 2009035702 A1 | 08-09-2010<br>19-03-2009<br>19-03-2009 |

EPO FORM P0459

For more details about this annex : see Official Journal of the European Patent Office, No. 12/82